# EUROPÄISCHE PATENTSCHRIFT

(11) **EP 2 451 620 B1**
(45) Veröffentlichungstag und Bekanntmachung des Hinweises auf die Patenterteilung: **03.04.2019**
(21) Anmeldenummer: 09780169.0
(22) Anmeldetag: 06.07.2009
(51) Int. Cl.: B28B 1/52, C04B 28/10, C04B 28/32, B27N 3/00, B27N 3/18, B28B 5/02, C04B 111/28

(54) **VERFAHREN ZUR HERSTELLUNG VON PLATTEN AUS NACHWACHSENDEN ROHSTOFFEN IM ENDLOSVERFAHREN UND PLATTE AUS NACHWACHSENDEN ROHSTOFFEN**
METHOD FOR PRODUCING SHEETS FROM RENEWABLE RAW MATERIALS IN AN ENDLESS PROCESS AND SHEET OF RENEWABLE RAW MATERIALS
PROCÉDÉ DE FABRICATION DE PLAQUES À BASE DE MATIÈRES PREMIÈRES RENOUVELABLES PAR LE PROCÉDÉ CONTINU ET PLAQUE À BASE DE MATIÈRES PREMIÈRES RENOUVELABLES

(43) Veröffentlichungstag der Anmeldung: 16.05.2012
(73) Patentinhaber: Strohlos Produktentwicklung KG, 17192 Waren (Müritz) (DE)
(72) Erfinder: LOSEHAND, Christian, 17192 Waren (Müritz) (DE)
(74) Vertreter: Garrels, Sabine
(86) Internationale Anmeldenummer: PCT/EP2009/058481
(87) Internationale Veröffentlichungsnummer: WO 2011/003436

(56) Entgegenhaltungen:
- GB-A- 2 004 807
- US-A- 3 963 849
- US-A- 5 632 848
- US-A1- 2009 025 850

## Beschreibung

Die Erfindung betrifft ein Verfahren zur Herstellung von Platten aus nachwachsenden Rohstoffen im Endlosverfahren, das sich gegenüber bisher bekannten Verfahren durch einen wesentlich geringeren Energiebedarf abhebt.

Daneben betrifft die Erfindung eine Platte, die nach dem erfindungsgemäßen Verfahren hergestellt wird.

### Stand der Technik

Bauelemente aus nachwachsenden Rohstoffen, insbesondere auch für den Innenausbau, werden von weiten Verbraucherkreisen verstärkt nachgefragt. Zumeist weisen sie geringere Preise gegenüber Bauelementen aus künstlichen oder langsam wachsenden natürlichen Rohstoffen auf. Gegenüber den künstlichen Bauelementen werden sie auch deshalb vorgezogen, weil sie umweltverträglich hergestellt werden können und ein besseres Raumklima schaffen. Um der großen Nachfrage Herr zu werden bieten sich Herstellungsverfahren im Endlosverfahren an.

Herkömmliche Endlosverfahren - nicht nur zur Herstellung von Platten aus nachwachsenden Rohstoffen - sehen vor, dass ein Gemisch aus dem Grundmaterial und einem Bindemittel unter Einsatz von Druck und/oder Temperatur zu einer Platte verarbeitet werden.

Platten aus nachwachsenden Rohstoffen und Verfahren zu deren Herstellung sind dabei bekannt. In der Schrift DE 28 41 172 A1 wird eine Vielzweckplatte offenbart, die aus pflanzlichen Materialien landwirtschaftlichen Ursprungs und/oder Holzmaterial sowie weiteren Zusatzstoffen besteht. Für die Herstellung werden die genannten mit Bindemitteln versehenen Inhaltsstoffe in einer Plattenschüttung zusammengefasst und unter Druck- und Temperaturzuführung zu einer Platte weiterverarbeitet. Als Bindemittel werden Zement, Gips oder vergleichbare Materialien verwendet.

Auch die Schrift DE 198 10 862 C2 offenbart ein Verfahren, mit dem Dämmplatten aus nachwachsenden Rohstoffen - in diesem Fall teilweise sehr fein geschnittenes und aufgespleißtes Stroh - unter Einsatz von Druck und Temperatur hergestellt werden können. Die Materialbehandlung ist sehr kostenintensiv. Beide zuvor genannten Verfahren benötigen außerdem sowohl Druck als auch Erwärmung, damit die damit hergestellten Platten einen Zustand erreichen, in dem sie weiterverarbeitet werden können. Bei der zuletzt genannten Dämmplatte muss sogar zusätzlich eine Vorverdichtung erfolgen. Das Beaufschlagen der Ausgangsmaterialien mit Druck ist durch den Einsatz von großen Pressen, die betrieben und gewartet werden müssen, sehr teuer. Auch das Zuführen von Wärme ist mit einem hohen Energieaufwand verbunden.

In der Schrift DE 198 11 807 A1 wird eine Herstellung eines Dämmelements vorgestellt, bei der im diskontinuierlichen Verfahren die einzelnen Komponenten miteinander vermischt werden, und diese Mischung dann in Formen gegeben und gepresst wird, bzw. im kontinuierlichen Verfahren die Mischung in eine Band- oder Plattenpresse gegeben und unter Druck in Form gebracht wird. Auch wenn durch diese Art der Herstellung ohne Temperatureinwirkung schon eine Verringerung des Energieaufwandes erreicht wird, ist der Beaufschlagen mit Druck mit dem Betrieb einer Maschine und damit mit Energiekosten verbunden. Dieses ist als nachteilig zu beurteilen.

In der Schrift DE 198 29 261 A1 wird ein Verfahren offenbart, nach dem nachwachsende Rohstoffe wie z.B. Stroh oder Gras einer Zerkleinerung unterworfen und dann mit einem Bindemittel vermischt werden. Diese Masse wird anschließend auf ein Transportband mit Seitenbegrenzung aufgebracht und gegebenenfalls unter leichtem Druck und durch eine thermische Behandlung zum Endprodukt verarbeitet. Bei dieser Erfindung wird Wärme genutzt, um die Mischung bestehend aus nachwachsenden Rohstoffen und Bindemitteln zu einer Platte zu verfestigen. Für die Herstellung dieser Platte ist also ebenfalls mit hohen Energieverbräuchen zu rechnen, um die zur thermischen Behandlung benötigten Vorrichtungen zu betreiben.

Aus der Offenlegungsschrift DE 10 2007 026 638 A1 ist eine Platte bekannt, die aus nachwachsenden Rohstoffen hergestellt wird und Hitzebeständigkeit aufweist. Bei dieser Platte werden die nachwachsenden Rohstoffe aus einem Bindemittel bestehend aus Magnesiumcarbonat, Magnesiumoxid, Magnesiumchlorid und Wasser vermengt und in Formen zum Aushärten gebracht. Nachteilig bei dieser Platte ist, dass sie vergleichsweise schwer ist und nicht in einem Endlosverfahren hergestellt werden kann. Aus der US 2009/025850 A1 ist ein Verfahren zur Herstellung von Platten und Platten mit den Inhaltsstoffen Magnesiumoxid, Magnesiumchlorid, Bindemittel mit Perlit, Wasser und Holzraspel oder auch recycelten Pappschnitzeln bekannt. Nachteilig an den daraus bekannten Platten ist, dass diese eine unzureichende Stabilität aufweisen und hohen Aufwand bei der Herstellung erfordern.

### Darstellung der Erfindung

Aufgabe der Erfindung ist es daher, ein kontinuierliches Herstellungsverfahren bereitzustellen, mit dem Platten aus nachwachsenden Rostoffen kostengünstiger als nach herkömmlichen Verfahren hergestellt werden können.

Erfindungsgemäß wird diese Aufgabe durch die kennzeichnenden Merkmale des Anspruchs 1 gelöst. Besondere Ausgestaltungsformen des Verfahrens werden in den abhängigen Ansprüchen 2 bis 7 beansprucht.

Daneben betrifft die Erfindung gleichzeitig eine Platte gemäß Anspruch 8 aus nachwachsenden Rohstoffen, die in einem kontinuierlichen Verfahren gemäß den Ansprüchen 1 bis 7 hergestellt wird und dabei hohe Anforderungen bezüglich Stabilität, Verarbeitbarkeit und Hitzebeständigkeit erfüllt.

Erfindungsgemäß wird diese zweite Aufgabe durch die kennzeichnenden Merkmale der Ansprüche 8 bis 11 gelöst.

Bei dem kontinuierlichen Herstellungsverfahren von Platten aus nachwachsenden Rohstoffen wird zunächst eine Masse zur Herstellung der Platte aus nachwachsenden Rohstoffen, einem Bindemittel und Glaskugeln sowie gegebenenfalls weiteren Beimengungen gemischt. Das Bindemittel kann dabei aus Magnesiumcarbonat, Magnesiumoxid, Magnesiumchlorid und Wasser bestehen, damit brandhemmende Eigenschaften erreicht werden.

Diese Masse wird auf ein Förderband verbracht, das seitliche Begrenzungen aufweist, um eine gleich bleibend breite Platte zu erhalten. Die Dicke dieser Masse ist davon abhängig, welche Dicke die herzustellende Platte letztlich aufweisen soll. So können Platten in Stärken von bis zu 10 Zentimetern nach dem Verfahren hergestellt werden. Nach oben über diese Masse überstehende Strohhäcksel oder unsaubere Massebeaufschlagungen auf das Förderband werden mit Hilfe eines Rakels eingeebnet. So entstehen auf der Unterseite durch das Förderband und auf der Oberseite mit Hilfe des Rakels ebene Flächen. Nach einem längeren Trocknen an der Luft wird mit Hilfe eines Messers oder einer Säge diese Platte aufgetrennt. Die Trennstücke weisen nach dem Trennen der noch nicht vollständig getrockneten Platte Ränder auf, die durch das Messer oder die Säge aufgerissen und daher auch schlecht verwertbar sind. Mit diesen unebenen Rändern werden die Platten zur Endtrocknung an der Luft einer Lagerung zugeführt.

In einem nächsten Verfahrensschritt werden dann die nunmehr vollständig durchgetrockneten Platten entnommen und so konfektioniert, dass die unsauber geschnittenen Randbereiche der Platten als Reststücke abgetrennt werden. Bei geeigneter Wahl der Schnittabstände beim Trennen kann davon ausgegangen werden, dass auch bei größeren abzutrennenden Bereichen Plattengrößen erreicht werden, die dem Bedarf der Bauindustrie bzw. Vorschriften an Ausgangsmaterialien gerecht werden. Das Trennmaterial in Form der abgetrennten Randbereiche wird in einem nächsten Verfahrensschritt aufgebrochen und einer Granulierung durch Häckseln unterzogen. Dieses Granulat wird beziehungsweise diese Häcksel werden in einem letzten Verfahrensschritt wiederum dem erfindungsgemäßen Herstellungsprozess der Platte aus nachwachsenden Rohstoffen zugeführt.

Je dünner die nach dem Verfahren hergestellte Platte ist, desto weniger Verschnitt muss befürchtet werden, da dünne Platte schon auf dem Förderband gut abtrocknen und so ein Ausreißen der Platten beim Auftrennen vermieden werden kann. Je dicker die Platte wird, desto großer sind die Schnittabstände zu wählen.

Es ist denkbar, dass diesem Herstellungsprozess weitere Verfahrensschritte vorausgehen bzw. in ihn integriert werden. Als Beispiel kann hier ein Aufbringen einer Dekorschicht auf das Förderband genannt werden, auf die dann erst die Masse aufgetragen wird. So erhält man eine auf einer Seite mit einer Dekorschicht versehene Platte. Auch das Auftragen einer weiteren Dekorschicht, nachdem die Platte mit dem Rakel behandelt worden ist, ist möglich. Daneben können auch Platten aus verschiedenen Schichten entstehen, bei denen die Schichten unterschiedliche Materialzusammensetzungen aufweisen. So können für eine weiter außen liegende Schicht feinere Grundstoffe mit den entsprechenden Bindemitteln zu einer Masse vermengt werden, während in einer Mittelschicht gröbere Rohstoffe Anwendung finden. Außerdem kann bei den einzelnen Schichten auf weitere Beimengungen wie z.B. Granulate verzichtet werden.

Nach dem Aufbringen jeder Schicht kann jeweils ein Rakel zur Glättung eingesetzt werden, es ist aber auch denkbar, dass nur die abschließende, letzte Schicht mit dem Rakel behandelt wird, bevor sie dem Trocknungsprozess zugeführt bzw. mit einer Dekorschicht versehen wird. Außerdem ist es möglich zur Erhöhung der Stabilität der Platte Armierungen einzubringen, wobei diese Armierungen vorteilhafterweise ebenfalls aus nachwachsenden Rohstoffen bestehen sollten.

Von besonderem Vorteil bei einer Herstellung nach dem genannten Verfahren ist, dass außer der Energie, die zum Aufbringen der Materialien und zum Transportieren und Konfektionieren benötigt wird, keine weiteren Energieeinträge notwendig werden, auch wenn bei einer kurzfristig erhöhten Anfrage zusätzlich die Trocknung durch Wärmezufuhr beschleunigt werden kann. Darüber hinaus können alle Abfallmaterialien, die beim Herstellungsprozess entstehen, problemlos wieder in den Produktionskreislauf übernommen werden, so dass keine Produktionsabfälle entstehen, die gegebenenfalls sogar kostenpflichtig entsorgt werden müssten.

Die nach dem Verfahren hergestellte Platte weist den besonderen Vorteil auf, dass sie gegenüber der brandhemmenden Platte nach dem Stand der Technik durch das Einbringen von Glaskugeln, vergleichbare brandhemmende Eigenschaften aufweisen, jedoch deutlich leichter ist. So wird der Einsatz einer solchen Platte variabler und die Handhabbarkeit verbessert. Dabei sind Glaskugelanteile in der Masse zur Herstellung einer Platte aus nachwachsenden Rohstoffen von bis zu 50 % denkbar, vorzugsweise sollen jedoch nur 10 bis 30 % und in einer besonders bevorzugten Ausgestaltung 10 bis 20 % der Masse aus Glaskugeln bestehen.

Die Randbereiche können - da sie brandhemmend sind - nicht oder nur schwer einer thermischen Verwertung zugeführt werden und finden in gehäckselter oder granulierter Form innerhalb der Platte als Beimengung eine Wiederverwertung. Damit wird der besonders umweltschonende Gedanke dieser Platte noch weiter unterstrichen.

Holzschnitzel bzw. -späne oder Holzabfälle, die selbst die Papierindustrie nicht mehr verwerten kann, und Textilindustrieabfälle können darüber hinaus ebenfalls in geringen Mengen innerhalb der Masse zur Herstellung einer Platte Verwendung finden.

Außerdem steht auch einer Anwendung des Taktverfahrens bei der Herstellung von erfindungsgemäßen Platten ohne Druck- und Temperaturbeaufschlagung nichts entgegen. Dieses Verfahren, das in der produzierbaren Menge hinter einem Endlosverfahren zurückbleibt, hat den Vorteil, dass keine Trennstücke entstehen, die granuliert werden müssen. So können andere Materialien, wie z.B. die zuvor genannten Abfälle aus der Papier-, Holz- oder Textilindustrie in höheren Anteilen in die Platte eingegeben werden.

## Patentansprüche

1. Verfahren zur Herstellung einer Platte aus nachwachsenden Rohstoffen, mit den Verfahrensschritten:
Mischen einer Masse zur Herstellung einer Platte aus nachwachsenden Rohstoffen, wobei die Masse zur Herstellung einer Platte aus nachwachsenden Rohstoffen, nachwachsende Rohstoffe, Glaskugeln sowie ein Bindemittel aus Magnesiumcarbonat, Magnesiumoxid, Magnesiumchlorid und Wasser umfasst,
Auftragen der Masse auf ein Förderband, welches seitliche Begrenzungen aufweist,
Auftrennen der aus der Masse entstandenen Endlosplatte in Abschnitte,
Abtrennen von Randbereichen der Abschnitte, die durch das Auftrennen der Endlosplatte in Mitleidenschaft gezogen worden sind,
Verarbeitung der Randbereiche zu Häckseln und
Einbringen dieser Häcksel in die Masse zur Herstellung einer Platte aus nachwachsenden Rohstoffen in den weiteren Produktionsprozess,
wobei nach dem Auftragen der Masse auf das Förderband hervorstehende Materialien oder Unebenheiten mit einem einfachen Rakel beseitigt werden,
im Anschluss daran ein erstes Lufttrocknen der Masse auf dem Förderband erfolgt
und nach dem Auftrennen der Masse eine Endtrocknung an der Luft in einer Lagervorrichtung erfolgt.

2. Verfahren nach Anspruch 1, **dadurch gekennzeichnet, dass** eine Dekorschicht auf das Förderband aufgelegt wird, auf die die Masse zur Herstellung einer Platte aufgetragen wird und mit der sich die Masse verbindet.

3. Verfahren nach den Ansprüchen 1 und 2, **dadurch gekennzeichnet, dass** nach dem Beseitigen hervorstehender Materialien oder Unebenheiten mit einem einfachen Rakel, eine weitere Dekorschicht aufgelegt wird, die sich mit der Masse verbindet, bevor es zum Auftrennen der Endlosplatte in Abschnitte kommt.

4. Verfahren nach einem der Ansprüche 1 bis 3, **dadurch gekennzeichnet, dass** nach dem Aufbringen der Masse zur Herstellung einer Platte und dem Beseitigen hervorstehender Materialien oder Unebenheiten mit einem einfachen Rakel, mindestens eine weitere Schicht aus einer Masse zur Herstellung einer Platte aufgetragen wird, wobei diese und jede weitere Schicht abermals von hervorstehenden Materialien oder Unebenheiten mit Hilfe einer Vorrichtung, vorzugsweise einem einfachen Rakel, befreit wird.

5. Verfahren nach einem der Ansprüche 1 bis 3, **dadurch gekennzeichnet, dass** nach dem Aufbringen der Masse zur Herstellung einer Platte weitere Schichten aufgebracht werden, bevor die Masse von hervorstehenden Materialien oder Unebenheiten mit einem einfachen Rakel, befreit wird.

6. Verfahren nach einem der Ansprüche 4 oder 5, **dadurch gekennzeichnet, dass** die aufgetragenen Schichten unterschiedliche Materialzusammensetzungen aufweisen.

7. Verfahren nach einem der Ansprüche 1 bis 6, **dadurch gekennzeichnet, dass** Armierungen in die Masse zur Herstellung einer Platte eingebracht werden, wobei diese Armierungen aus nachwachsenden Rohstoffen bestehen.

8. Platte aus nachwachsenden Rohstoffen, hergestellt nach dem Verfahren gemäß der Ansprüche 1 bis 7, umfassend nachwachsende Rohstoffe, Glaskugeln sowie ein Bindemittel aus Magnesiumcarbonat, Magnesiumoxid, Magnesiumchlorid und Wasser, **dadurch gekennzeichnet, dass** der Anteil der Glaskugeln 10 bis 50% an der Masse zur Herstellung einer Platte beträgt.

9. Platte nach Anspruch 8, **dadurch gekennzeichnet, dass** zusätzlich ein Granulat beigemischt wird.

10. Platte nach Anspruch 9, **dadurch gekennzeichnet, dass** das Granulat aus den gehäckselten Randbereichen, die bei der Herstellung nach dem Verfahren gemäß der Ansprüche 1 bis 7 anfallen, besteht.

11. Platte nach einem der Ansprüche 9 oder 10, **dadurch gekennzeichnet, dass** als weitere Beimengung Holzschnitzel bzw. -späne, Holzabfälle oder Textilabfälle in der Masse zur Herstellung einer Platte enthalten sind.

## Claims

1. Process for producing a board from renewable raw materials, having the process steps of:
mixing a mass for production of a board from renewable raw materials, where the mass for production of a board from renewable raw materials comprises renewable raw materials, glass beads and a binder composed of magnesium carbonate, magnesium oxide, magnesium chloride and water,
applying the mass to a conveyor belt having lateral boundaries,
separating the continuous board formed from the mass into sections,
removing edge regions of the sections that have been affected by the separation of the continuous board,
processing the edge regions to give chips and
introducing these chips into the mass for production of a board from renewable raw materials in the continuation of the production process,
wherein, after the application of the mass to the conveyor belt, protruding materials or unevenness are eliminated with a simple scraper,
this is followed by a first air-drying operation of the mass on the conveyor belt
and the separation of the mass is followed by final drying under air in a storage device.

2. Process according to Claim 1, **characterized in that** a decorative layer is placed onto the conveyor belt to which the mass for production of a board is applied and bonds to the mass.

3. Process according to Claim 1 or 2, **characterized in that** the elimination of protruding materials or unevenness with a simple scraper is followed by placing-on of a further decorative layer which bonds to the mass before the continuous board is separated into sections.

4. Process according to any of Claims 1 to 3, **characterized in that** the application of the mass for production of a board and the elimination of protruding materials or unevenness with a simple scraper is followed by application of at least one further layer of a mass for production of a board, and these and every further layer are once again freed of protruding materials or unevenness with the aid of a device, preferably a simple scraper.

5. Process according to any of Claims 1 to 3, **characterized in that** the application of the mass for production of a board is followed by application of further layers before the mass is freed of protruding materials or unevenness with a simple scraper.

6. Process according to either of Claims 4 and 5, **characterized in that** the layers applied have different material compositions.

7. Process according to any of Claims 1 to 6, **characterized in that** reinforcements are introduced into the mass for production of a board, said reinforcements consisting of renewable raw materials.

8. Board made from renewable raw materials, produced by the process according to Claims 1 to 7, comprising renewable raw materials, glass beads and a binder composed of magnesium carbonate, magnesium oxide, magnesium chloride and water, **characterized in that** the proportion of glass beads is 10% to 50% of the mass for production of a board.

9. Board according to Claim 8, **characterized in that** a pelletized material is additionally mixed in.

10. Board according to Claim 9, **characterized in that** the pelletized material consists of the chipped edge regions that occur in the production by the process according to Claims 1 to 7.

11. Board according to either of Claims 9 and 10, **characterized in that** wood chips or shavings, wood wastes or textile wastes are present as a further addition in the mass for production of a board.

## Revendications

1. Procédé de fabrication d'une plaque à base de matières premières renouvelables, comprenant les étapes suivantes:
mélanger une masse destinée à la fabrication d'une plaque à base de matières premières renouvelables, danslequel la masse destinée à la fabrication d'une plaque à base de matièrespremières renouvelables comprend des matières premières renouvelables, de billes de verre ainsi qu'un liant à base de carbonate de magnésium, d'oxyde de magnésium, de chlorure de magnésium et d'eau,
déposer la masse sur une bande transporteuse, qui présente des limitations latérales,
découper la plaque continue née dela masse en tronçons,
découper des régions de bord des tronçons, qui ont été affectées par le découpage de la plaque continue,
hacher les régions de bord en fragments, et
introduire ces fragments dans la masse destinée à la fabrication d'une plaque à base de matières premières renouvelables dans le processus de production ultérieur,
dans lequel après le dépôt de la masse sur la bande transporteuse on élimine les matériaux saillants ou les inégalités avec une simple racle,
on effectue ensuite un premier séchage à l'air de la masse sur la bande transporteuse, et
après le découpage de la masse on effectue un séchage final à l'air dans un dispositif de stockage.

2. Procédé selon la revendication 1, **caractérisé en ce que** l'on dépose sur la bande transporteuse une couche décorative, sur laquelle on dépose la masse destinée à la fabrication d'une plaque et à laquelle la masse s'allie.

3. Procédé selonles revendications 1 et 2, **caractérisé en ce qu'**aprèsl'élimination des matériaux saillants ou des inégalités avec unesimple racle, on dépose une autre couche décorative,qui s'allie à la masse, avant que l'on procède au découpage de la plaque continue en tronçons.

4. Procédé selon l'une quelconque des revendications 1 à 3, **caractérisé en ce qu'**après le dépôt de la masse destinée à la fabrication d'une plaque et l'élimination des matériaux saillants ou des inégalités avec une simple racle, on dépose au moins une autre couche destinée à la fabrication d'une plaque, dans lequel celle-ci et chaque autre couche est de nouveau débarrassée de matériaux saillants ou d'inégalités à l'aide d'un dispositif, de préférence d'une simple racle.

5. Procédé selon l'une quelconque des revendications 1 à 3, **caractérisé en ce qu'**après le dépôt de lamasse destinée à la fabrication d'une plaque on dépose d'autres couches,avantquela masse soit débarrassée de matériaux saillants ou d'inégalités avec une simple racle.

6. Procédé selon une des revendications 4 ou 5, **caractérisé en ce que** les couches déposées présentent des compositions dematériaux différentes.

7. Procédé selon l'une quelconque des revendications 1 à 6, **caractérisé en ce que** l'on introduit des armatures dans la masse destinée à la fabrication d'une plaque, dans lequel ces armatures sont composées de matières premières renouvelables.

8. Plaque à base de matières premières renouvelables, fabriquée par le procédé selon l'une quelconque des revendications 1 à 7, comprenant des matières premières renouvelables, des billes de verre ainsi qu'un liant à base de carbonate de magnésium, d'oxyde de magnésium, de chlorure de magnésium et d'eau, **caractérisée** enceque la proportion de billes de verre vaut 10 à 50 % de la masse destinée à la fabrication d'une plaque.

9. Plaque selon la revendication 8, **caractérisée en ce que** l'on incorpore en plus un granulat.

10. Plaque selon la revendication 9, **caractérisée en ce que** le granulat se compose des régions de bord hachées, qui proviennent de la fabrication suivant le procédé selon les revendications 1 à 7.

11. Plaque selon une des revendications 9 ou 10, **caractérisée en ce que** comme autres ajouts des fragments ou des copeaux de bois, des déchets de bois ou des déchets textiles sont contenus dans la masse destinée à la fabrication d'une plaque.
